# EUROPÄISCHE PATENTSCHRIFT

(11) **EP 3 204 283 B1**
(45) Veröffentlichungstag und Bekanntmachung des Hinweises auf die Patenterteilung: **10.03.2021**
(21) Anmeldenummer: 15738887.7
(22) Anmeldetag: 14.07.2015
(51) Int. Cl.: B62D 33/06, F16F 1/373, F16F 1/38, F16F 1/393

(54) **LAGERUNG FÜR EINE FAHRERKABINE EINES FAHRZEUGES**
SUPPORT FOR A DRIVER'S CAB OF A VEHICLE
SUSPENSION POUR UNE CABINE DE CONDUCTEUR D'UN VÉHICULE AUTOMOBILE

(30) Priorität: 07.10.2014 DE 102014220291
(43) Veröffentlichungstag der Anmeldung: 16.08.2017
(73) Patentinhaber: ContiTech Vibration Control GmbH, 30165 Hannover (DE)
(72) Erfinder: KOSOV, Oleksandr, 30855 Langenhagen (DE)
(74) Vertreter: Continental Corporation
(86) Internationale Anmeldenummer: PCT/EP2015/066008
(87) Internationale Veröffentlichungsnummer: WO 2016/055174

(56) Entgegenhaltungen:
- EP-A1- 0 429 084
- JP-A- H0 616 152
- JP-A- H0 754 379
- JP-U- H0 564 246
- US-A- 5 984 036
- US-A- 6 017 073

## Beschreibung

Die Erfindung betrifft eine Lagerung für eine Fahrerkabine eines Fahrzeuges.

Moderne Baufahrzeuge, landwirtschaftliche Fahrzeuge und/oder Lastkraftwagen weisen überwiegend geschlossene Fahrerkabinen auf, welche beispielsweise auf Kabinenträgern des Fahrzeuges aufgesetzt und festgelegt sind. Die Fahrerkabinen sind dabei üblicherweise auf Gummilagern zur Dämpfung von Vibrationen gelagert. Die geschlossenen Fahrerkabinen erhöhen die Sicherheit eines Bedieners des Fahrzeuges und schützen diesen vor Wettereinflüssen sowie reduzieren den Einfluss äußerer Geräuschquellen. Die verwendeten Gummilager sind dabei üblicherweise zwischen einem Boden der Fahrerkabine und den Kabinenträgem angeordnet, wobei die Kabine beispielsweise jeweils mittels eines Kabinenbolzens mit einem Gummilager verbunden werden kann.

Aus der DE 39 38 962 A1 ist eine elastische Lagerung für die Fahrerkabine eines landwirtschaftlichen oder bauwirtschaftlichen Fahrzeuges bekannt, welche zwischen der Fahrerkabine und dem Fahrzeugrumpf bzw. dem Fahrgestell eingesetzt ist und ein Dämpfungsglied aufweist. Als Dämpfungsglied ist ein scheibenförmiger Isolator vorgesehen, der mit Metalleinfassungen, der Buchse und der Befestigungsplatte versehen ist. Durch das elastische Gummilager ist eine über weite Bereiche weiche Lagerung für die Fahrerkabine mit einem progressiven Kennlinienverlauf der Lagerung erzielbar. Nachteilig ist hierbei jedoch die aufwändige Montage des Gummilagers an dem Fahrgestell mit einer Vielzahl von Senkkopfschrauben. Zudem kann eine auf die Fahrerkabine und damit die Lagerung wirkende Zugbelastung zu einer Beschädigung des Gummilagers führen Eine weitere Lagerung für eine Fahrerkabine eines Fahrzeugs ist aus der US 59 84 036 bekannt,- von der die vorliegende Erfindung ausgeht-

Weiterhin ist es erforderlich, dass bei Fahrzeugen wie Baumaschinen und landwirtschaftlichen Fahrzeugen bestimmte Sicherheitsnormen erfüllt werden müssen. Dabei muss beispielsweise im Falle eines Umkippens oder Überschlagens des Fahrzeuges die Fahrerkabine steif genug sein damit der Bediener des Fahrzeuges geschützt wird und ebenso wenig darf die Fahrerkabine von dem Fahrzeug bei einem derartigen Unfall abgerissen werden.

Es ist daher die Aufgabe der vorliegenden Erfindung, eine abreißsichere Lagerung für eine Fahrerkabine eines Fahrzeuges bereitzustellen, welche eine erleichterte Montage ermöglicht, sowie eine Beschädigung der Lagerung bei einer auf die Lagerung wirkenden Zugkraft vermeidet.

Die Aufgabe wird gelöst durch die Merkmale des Anspruches 1. Weitere vorteilhafte Ausgestaltungen der Erfindung sind in den Unteransprüchen dargelegt.

Somit betrifft die vorliegende Erfindung eine abreißsichere Lagerung für eine Fahrerkabine eines Fahrzeuges, welche in einem montierten Zustand zwischen der Fahrerkabine und einem Kabinenträger des Fahrzeuges angeordnet ist, mit einem Konuslager, welches mittig eine an der Fahrerkabine festlegbare und sich durch eine Öffnung des Kabinenträgers erstreckende, hohl ausgebildete Lagerhülse aufweist, wobei die Lagerhülse außenseitig über ein mit dieser verbundenes elastisches Dämpfungselement mit einem konzentrisch angeordneten Tragelement verbunden ist, wobei das Tragelement an dem Kabinenträger kabinenseitig mittels Verbindungselementen festlegbar ist, und mit einem an einem der Fahrerkabine abgewandten Ende der Lagerhülse angeordneten Anschlagelement zur Begrenzung einer Bewegung des Dämpfungselementes in axialer Richtung. Erfindungsgemäß ist an einer dem Anschlagelement zugewandten Seite des Kabinenträgers ein Montageelement angeordnet, welches mittels der Verbindungselemente konzentrisch zu der Lagerhülse an dem Kabinenträger befestigt ist.

Ein Fahrzeug weist üblicherweise zur Aufnahme einer Fahrerkabine eine Mehrzahl von Kabinenträgern auf an denen jeweils eine Lagerung angeordnet ist, auf welche die Fahrerkabine abgestellt und mit diesen verbunden werden kann. Die Lagerung weist dazu jeweils ein Konuslager auf, welches mit dem Kabinenträger durch Verbindungselemente, beispielsweise Schrauben, verbunden werden kann. Die Kabinenträger weisen dabei jeweils eine Öffnung auf, in welche sich das Konuslager in einem montierten zustand zumindest teilweise erstreckt, beispielsweise zur Reduzierung der Bauhöhe der Lagerung für die Fahrerkabine. Das Konuslager weist außenseitig zur Verbindung mit dem Kabinenträger ein Tragelement auf, wobei das Tragelement zumindest teilweise konisch ausgebildet sein kann, und im Wesentlichen rotationssymmetrisch um eine Längsachse des Konuslagers herum ausgebildet sein kann. Zum Festlegen des Tragelementes an dem Kabinenträger kann das Tragelement radial außenseitig eine oder mehrere Bohrungen zur Aufnahme von Verbindungselementen aufweisen. Das Tragelement ist über ein im Wesentlichen konisch ausgebildetes elastisches Dämpfungselement, beispielsweise aus Gummi, mit einer mittig koaxial zu der Längsachse angeordneten und zumindest teilweise konisch ausgebildeten Lagerhülse verbunden. Die Lagerhülse dient der Aufnahme und Aufnahme der Fahrerkabine, und ist insbesondere fahrerkabinenseitig zumindest teilweise konisch ausgebildet. Die Lagerhülse erstreckt sich von der Fahrerkabine durch die Öffnung in dem Kabinenträger. Das elastische Dämpfungselement, welches zwischen der mit der Fahrerkabine verbundenen Lagerhülse und dem mit dem Kabinenträger des Fahrzeugs verbundenen Tragelement angeordnet ist, ermöglicht eine Bewegung der Fahrerkabine relativ zu dem Kabinenträger im Wesentlichen in axialer Richtung entlang der Längsachse des Konuslagers, wodurch auftretende Schwingungen und Vibrationen des Fahrzeuges gedämpft und von der Fahrerkabine entkoppelt werden können.

Eine Bewegung der Fahrerkabine und der Lagerhülse in axialer Richtung, insbesondere bei auf die Lagerung wirkenden Zugkräften, kann durch ein an einem von der Fahrerkabine abgewandten Ende der Lagerhülse angeordneten Anschlagelement begrenzt werden. Durch das Anschlagelement kann auch ein Abreißen oder Lösen der Fahrerkabine von dem Kabinenträger vermieden werden, da das Anschlagelement nicht durch die Öffnung in dem Kabinenträger hindurch passt. Das Anschlagelement kann dabei scheibenförmig ausgebildet sein und mittels eines Kabinenbolzens zur Befestigung der Fahrerkabine an der Lagerhülse befestigbar sein. Zur Begrenzung der Bewegung des Anschlagelementes und der Lagerhülse in axialer Richtung ist an einer dem Anschlagelement zugewandten Seite des Kabinenträgers ein Montageelement angeordnet, welches mittels der Verbindungselemente konzentrisch zu der Lagerhülse an dem Kabinenträger befestigt ist. Die Verbindungselemente können dabei jeweils das Tragelement und das Montageelement an dem Kabinenträger festlegen. Die Verbindungselemente sind dabei jeweils in einer Bohrung angeordnet, welche sich durch das Tragelement, den Kabinenträger und das Montageelement erstreckt. Das Montageelement weist eine Öffnung auf, durch die das Konuslager zumindest teilweise hindurchragen kann, wobei das Montageelement konzentrisch zu dem Konuslager an dem Kabinenträger angeordnet ist. Das Montageelement kann scheibenförmig und/oder ringförmig ausgebildet sein, und ist in einem montierten Zustand mittels der Verbindungselemente, mit welchen das Konuslager, insbesondere das Tragelement an dem Kabinenträger befestigt ist, an dem Kabinenträger festgelegt. Das Montageelement ist dabei dem Tragelement gegenüberliegend an dem Kabinenträger angeordnet und befestigt, so dass entlang eines Verbindungselementes der Kabinenträger zwischen dem Tragelement und dem Montageelement angeordnet ist.

Das Anschlagelement ist in radialer Richtung größer ausgebildet als die Öffnung in dem Montageelement, so dass zwischen dem Anschlagelement und dem Montageelement in radialer Richtung eine Überlappung ausgebildet ist. Durch diese Überlappung kann ein Ausreißen des Lagers bei einer Überlastung durch Zugkräfte vermieden werden, da die Zugkräfte über das Anschlagelement und das Montageelement abgeleitet werden können. Durch einen einstellbaren Abstand zwischen dem Anschlagelement und dem Montageelement ist die relative Bewegung der Fahrerkabine und der Lagerhülse in axialer Richtung einstellbar begrenzt. Das elastische Dämpfungselement kann dabei in axialer Richtung ausgelenkt werden, bis das Anschlagelement in Kontakt mit dem Montageelement gerät. Der Abstand zwischen dem Anschlagelement und dem Montageelement kann dabei derart gewählt sein, dass eine Beschädigung des elastischen Dämpfungselementes vermieden wird. Vorteilhaft ist, dass bei einer weiteren Zunahme einer Zugkraft in axialer Richtung der Kraftfluss über das Anschlagelement durch das Montageelement in den Kabinenträger des Fahrzeuges geleitet wird, wodurch eine größere Dimensionierung und stärkere Auslegung insbesondere des Tragelementes vermieden werden kann, da über das Tragelement nur eine definierte Zugkraft, welche von der Verformung des elastischen Dämpfungselementes abhängig ist, auf den Kabinenträger übertragen wird. Durch die Befestigung des Montageelementes an dem Kabinenträger durch dieselben Verbindungselemente mit denen das Tragelement des Konuslagers mit dem Kabinenträger verbunden wird, kann zudem die Montage vereinfacht werden.

In einer vorteilhaften Ausgestaltung der Erfindung ist das Montageelement innerhalb der Öffnung des Kabinenträgers an dem Tragelement abgestützt. Das Tragelement kann einen konisch ausgebildeten Bereich aufweisen, welcher sich zumindest teilweise innerhalb der Öffnung in dem Kabinenträger erstreckt. Das Montageelement kann einen entsprechend ausgebildeten, radial innenseitig angeordneten konischen Bereich aufweisen, welcher in einem montierten Zustand des Montageelementes das Tragelement, insbesondere innerhalb der Öffnung des Kabinenträgers, kontaktiert. Der Kontaktbereich zwischen dem Tragelement und dem Montageelement, insbesondere in dem konisch ausgebildeten Bereich, kann dabei im Wesentlichen linienförmig und/oder flächig um die Längsachse des Konuslagers herum ausgebildet sein. Dadurch kann das Tragelement innerhalb der Öffnung des Kabinenträgers durch das Montageelement abgestützt werden, was den Vorteil hat, dass bei einer Druckbelastung des Konuslagers in axialer Richtung die Kräfte von dem Tragelement zumindest teilweise auf das Montageelement übertragen werden können und über die Verbindungselemente in den Kabinenträger geleitet werden können. Dies hat den Vorteil, dass das Tragelement weniger stark dimensioniert werden kann, wodurch Kosten eingespart werden können. Darüber hinaus kann eine Beschädigung des Tragelementes, beispielsweise bei einem Überlastfall, vermieden werden.

In einer weiter bevorzugten Ausgestaltung der Erfindung weist das an dem Kabinenträger festgelegte Montageelement einen linienförmigen und/oder flächigen Kontakt zu dem Kabinenträger auf. Dies hat den Vorteil, dass bei einer Übertragung von Zugkräften über das Anschlagelement auf das Montageelement die auftretenden Kräfte über eine größere Fläche gleichmäßig in den Kabinenträger abgeleitet werden können, wodurch punktuelle Überlastungen und Beschädigungen der Lagerung vermieden werden können.

Vorteilhafterweise weise das Montageelement einen sich zumindest teilweise in die Öffnung des Kabinenträgers erstreckenden Absatz, insbesondere zur radial außenseitigen Kontaktierung des Kabinenträgers innerhalb der Öffnung, auf. Der Absatz kann sich in axialer Richtung, insbesondere zu der Fahrerkabine hin, in die Öffnung erstrecken, wobei der Absatz in einem montierten Zustand des Montageelementes radial außenseitig eine Innenwandung der Öffnung des Kabinenträgers kontaktieren kann. Der Absatz kann radial innenseitig einen um die Längsachse des Konuslagers herum ausgebildeten konischen Bereich aufweisen, welcher zur Kontaktierung des Tragelementes in einem montierten Zustand ausgebildet sein kann. Der Absatz zur radial außenseitigen Kontaktierung des Kabinenträgers innerhalb der Öffnung des Kabinenträgers ermöglicht einerseits eine Zentrierung des Montageelementes bei der Montage, sowie eine Verbesserung der Aufnahme und Einleitung von auf das Konuslager und insbesondere das Tragelement wirkenden Scherkräften in den Kabinenträger. Dadurch können auch die auf die Verbindungselemente wirkenden Scherkräfte, welche im Wesentlichen rechtwinkelig zu der Längsachse des Konuslagers wirken können, verringert werden.

In einer besonders bevorzugten Ausgestaltung der Erfindung weist das Montageelement mindestens eine Bohrung mit einem Innengewinde zum Zusammenwirken mit einem Verbindungselement auf. Dies ermöglicht die Einsparung von Material zum Befestigen der Verbindungselemente, da beispielsweise bei Verbindungselementen in Form von Schrauben deren Außengewinde unmittelbar in das Innengewinde des Montageelementes verschraubt werden kann und dadurch die sonst üblichen Muttern eingespart werden können. Zudem kann dadurch die Montage des Montageelementes und des Konuslagers vereinfacht werden.

Weiterhin ist bevorzugt, dass bei einer Verlagerung der Lagerung in axialer Richtung das Anschlagelement und das mit diesem zusammenwirkende Montageelement einen, insbesondere ringförmigen, linienförmigen und/oder flächigen Kontakt aufweisen. Ein Zusammenwirken des Anschlagelementes und des Montageelementes kann bei einer axialen Verlagerung der Lagerung infolge von auftretenden Zugkräften erfolgen, wobei durch den ringförmigen, linienförmigen und/oder flächenförmigen Kontakt die auftretenden Zugkräfte besonders gleichmäßig in das Montageelement eingeleitet werden können.

In einer besonders bevorzugten Ausgestaltung der Erfindung weist die Lagerhülse anschlagelementseitig ein Außengewinde auf, und das Anschlagelement zum Zusammenwirken mit diesem Außengewinde ein entsprechendes Innengewinde. Dadurch kann das Anschlagelement bei der Montage der Lagerung unmittelbar an der Lagerhülse befestigt werden, insbesondere bevor die Fahrerkabine mit einem Kabinenbolzen an der Lagerung befestigt wird. Dies hat den Vorteil, dass das Anschlagelement unabhängig von dem Kabinenbolzen montiert werden kann und nicht erst auf die Befestigung der Kabine mittels Kabinenbolzen an der Lagerung gewartet werden muss. Das Innengewinde und Außengewinde können dabei derart dimensioniert sein, dass es lediglich dem Halten des Anschlagelementes an der Lagerhülse zu Montagezwecken ausgelegt ist. Eine Einleitung beispielsweise von Zugkräften in das Anschlagelement kann weiterhin über den montierten Kabinenbolzen erfolgen.

In einer weiteren Ausgestaltung der Erfindung weist das Anschlagelement eine Durchgangsbohrung mit einem Innengewinde zur Verschraubung mit einem Außengewinde eines Kabinenbolzens auf. Hierdurch kann die Montage der Lagerung der Fahrerkabine weiter vereinfacht werden, da der Kabinenbolzen unmittelbar mit dem Anschlagelement verschraubt werden kann, wodurch auch eine direkte Krafteinleitung von dem Kabinenbolzen in das Anschlagelement erfolgen kann. Das Anschlagelement kann in axialer Richtung eine zweistufig ausgebildete Durchgangsbohrung aufweisen, wobei in jeder Stufe ein Innengewinde ausgebildet sein kann, beispielsweise zur Befestigung des Anschlagelementes an der Lagerhülse und zur Befestigung des Kabinenbolzens. Dadurch können innerhalb der Durchgangsbohrung zwei Innengewinde mit unterschiedlichen Durchmessern ausgebildet werden, die eine Montage des Anschlagelementes an der Lagerhülse und eine Befestigung des Kabinenbolzens an dem Anschlagelement durch Verschrauben ermöglichen.

Vorteilhafterweise weist das Anschlagelement montageelementseitig eine elastische Beschichtung zur Kontaktierung des Montageelementes auf. Durch die elastische Beschichtung kann eine Dämpfung der Kraftübertragung zwischen dem Anschlagelement und dem Montageelement bewirkt werden. Zudem kann der Verschleiß an dem Anschlagelement und/oder dem Montageelement bei einer Kontaktierung verringert werden.

Weiterhin betrifft die Erfindung ein Fahrzeug mit mindestens einer wie vorstehend aus- und weitergebildeten Lagerung für eine Fahrerkabine.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Ansicht einer erfindungsgemäßen Lagerung in einem montierten Zustand;
- Fig. 2: eine schematische Schnittzeichnung durch eine Lagerung für eine Fahrerkabine;
- Fig. 3: eine perspektivisch schematische Ansicht eines Montageelementes; und
- Fig. 4: eine perspektivisch schematische Ansicht eines Anschlagelementes.

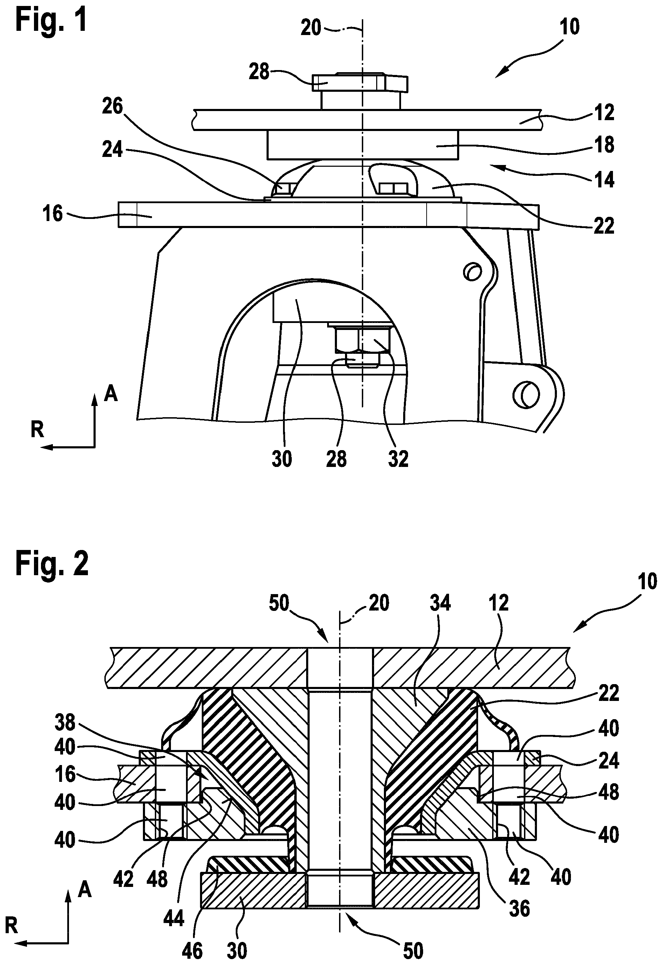

Fig. 1 zeigt eine Lagerung 10 für eine Fahrerkabine 12 eines Fahrzeuges. Die Lagerung 10 weist dabei ein Konuslager 14 auf, welches zwischen der Fahrerkabine 12 und einem Kabinenträger 16 angeordnet ist. Zur besseren Lastverteilung ist zwischen dem Konuslager 14 und der Fahrerkabine 12 ein Zwischenelement 18 angeordnet, welches in Form einer Scheibe konzentrisch zu einer Längsachse 20 des Konuslagers 14 angeordnet ist. Die Fahrerkabine 12, und insbesondere das Zwischenelement 18, sind an einer Lagerhülse (nicht dargestellt) mit dem Konuslager 14 verbunden. Die Lagerhülse ist dabei über ein konisch ausgebildetes, elastisches Dämpfungselement 22 mit einem Tragelement 24 verbunden. Das Tragelement 24 ist mit Verbindungselementen 26 fahrkabinenseitig in dem Kabinenträger 16 befestigt. Die Fahrerkabine 12 ist über einen Kabinenbolzen 28, welcher durch das Konuslager 14 und dessen hohl ausgebildete Lagerhülse hindurch ragt, mit dem Konuslager 14 verbunden. Auf einer der Fahrerkabine 12 abgewandten Seite des Kabinenträgers 16 ist ein Anschlagelement 30 koaxial zu der Längsachse 20 des Konuslagers 14 an dem Konuslager 14 angeordnet und wird mittels des Kabinenbolzens 28 und einer Mutter 32, welche an dem Anschlagelement 30 anliegt, gehalten. In diesem montierten Zustand der Lagerung 10 können Druckkräfte, beispielsweise das Gewicht der Fahrerkabine 12, über die Lagerhülse, über das elastische Dämpfungselement 22 und das Tragelement 24 in den Kabinenträger 16 eingeleitet werden.

Zur Vermeidung einer Beschädigung der Lagerung 10, insbesondere des elastischen Dämpfungselementes 22, bei auftretenden Zugkräften in axialer Richtung A ist die Relativbewegung der in Fig. 2 dargestellten hohlen Lagerhülse 34 zu dem Tragelement 24 begrenzt. Hierfür ist erfindungsgemäß anschlagelementseitig ein Montageelement 36 an dem Kabinenträger 16 angeordnet. Der Abstand zwischen dem Montageelement 36 und dem Anschlagelement 30 ist dabei derart eingestellt dass bei einer Auslenkung der Lagerhülse 34 und damit des Anschlagelementes 30 in axialer Richtung A das Anschlagelement 30 und das Montageelement 36 in Kontakt kommen bevor das elastische Dämpfungselement 22 beschädigt wird. Das Anschlagelement 30 ist dabei über den Kabinenbolzen 28 über die Lagerhülse 34 mit der Fahrerkabine 12 verbunden. Die Lagerhülse 34 ist dabei hohl ausgebildet zur Aufnahme des Lagerbolzens 28, und weist fahrerkabinenseitig zumindest teilweise eine konische Form auf. Die Lagerhülse 34 erstreckt sich dabei von der Fahrerkabine 12 durch eine Öffnung 38 des Kabinenträgers hindurch. Zumindest in dem konisch ausgebildeten Bereich der Lagerhülse 34 ist die Lagerhülse 34 mit dem Dämpfungselement 22 verbunden, welches ebenfalls eine konische Form aufweist und ebenfalls rotationssymmetrisch um die Längsachse 20 des Konuslagers 14 herum ausgebildet ist. Außenseitig ist das elastische Dämpfungselement 22 mit dem Tragelement 24 verbunden, wobei das Tragelement 24 radial innenseitig einen konischen Bereich aufweist, welcher zumindest teilweise in der Öffnung 38 des Kabinenträgers 16 angeordnet ist.

Radial außenseitig weist das Tragelement 24 Bohrungen 40 zur Aufnahme eines Verbindungselementes 26 auf. Die Bohrung 40 erstreckt sich durch das Tragelement 24, den Kabinenträger 16 sowie durch das Montageelement 36. Die Bohrung 40 weist in dem Montageelement 36 jeweils ein Innengewinde 42 auf, wodurch ein Verbindungselement 26 in Form einer Schraube jeweils direkt mit seinem Außengewinde in dem zugeordneten Innengewinde 42 des Montageelementes 36 verschraubt werden kann. In einem montierten Zustand der Lagerung 10 wird eine Druckkraft in axiale Richtung A, beispielsweise das Gewicht der Fahrerkabine 12, über die Lagerhülse 34 und das elastische Dämpfungselement 22 in das Tragelement 24 geleitet. Von dem Tragelement 24 kann die Druckkraft zumindest teilweise in den Kabinenträger 16 abgeleitet werden. Innerhalb der Öffnung 38 des Kabinenträgers 16 weisen das Montageelement 36 und das Tragelement 24 eine konisch ausgebildete und ringförmig um die Längsachse 20 des Konuslagers 14 herum ausgebildete Kontaktfläche 44 auf, an der das Tragelement 24 durch das Montageelement 36 in axialer und/oder radialer Richtung abgestützt wird. Dadurch können zumindest teilweise auf das Tragelement 24 wirkende Druckkräfte über die Kontaktfläche 44 und das Montageelement 36 über die Verbindungselemente 26 in den Kabinenträger 16 abgeleitet werden.

Bei einem Aufschaukeln des Fahrzeuges oder bei einem Unfall, beispielsweise bei einem Überschlag, können Zugkräfte in axialer Richtung A auftreten, welche die Lagerung 10, insbesondere das elastische Dämpfungselement 22 des Konuslagers 14, beschädigen könnten. Die maximal auf das elastische Dämpfungselement 22 wirkenden Zugkräfte können jedoch durch die Einstellung des Abstandes zwischen dem Anschlagelement 30 und dem Montageelement 36 bestimmt werden, so dass eine Beschädigung des elastischen Dämpfungselementes 22 vermieden werden kann. Bei einer Auslenkung der Lagerung 10 in axialer Richtung A, kann das Anschlagelement 30 das Montageelement 36 infolge von auftretenden Zugkräften kontaktieren, und mit diesem eine ringförmige Kontaktfläche um die Längsachse 20 herum ausbilden. Die über den Kabinenbolzen 28 in das Anschlagelement 30 eingeleiteten Zugkräfte können als Druckkräfte über das Montageelement 36 in den Kabinenträger 16 abgeleitet werden. Dadurch kann auch bei einem Überschlag des Fahrzeuges ein Abreißen der Fahrerkabine 12 vermieden werden, da durch das Montageelement 36 und das Anschlagelement 30 ein Lösen der Verbindung zwischen der Fahrerkabine 12 und dem Kabinenträger 16 vermieden werden kann.

Um eine zusätzliche Dämpfung zu erreichen und eine Beschädigung des Anschlagelementes 30 und/oder des Montageelementes 36 zu vermeiden, ist an dem Anschlagelement 30 montageelementseitig eine elastische Beschichtung 46 angebracht. Die elastische Beschichtung 46 ist dabei rotationssymmetrisch um die Längsachse 20 herum flächig an dem Anschlagelement 30 angeordnet. Beispielsweise zur Aufnahme von Scherkräften, welche nicht koaxial zur Längsachse 20 auf die Lagerung 10 wirken, weist das Montageelement 36 einen Absatz 48 auf, welcher sich in einem montierten Zustand des Montageelementes 36 in axialer Richtung in die Öffnung 38 des Kabinenträgers 16 erstreckt. Der Absatz 48 kann radial außenseitig innerhalb der Öffnung 38 an dem Kabinenträger 16 anliegen. Dadurch können Scherkräfte, welche beispielsweise senkrecht zur Längsachse 20 in radialer Richtung R wirken, über die Lagerhülse 34 über das elastische Dämpfungselement 22 auf das Tragelement 24 übertragen werden, durch das Montageelement 36 aufgenommen und in den Kabinenträger 16 abgeleitet werden. Dadurch können auf die Verbindungselemente 26 wirkende Scherkräfte vermieden werden, welche zu einem Bruch der Verbindungselemente 26 führen könnten.

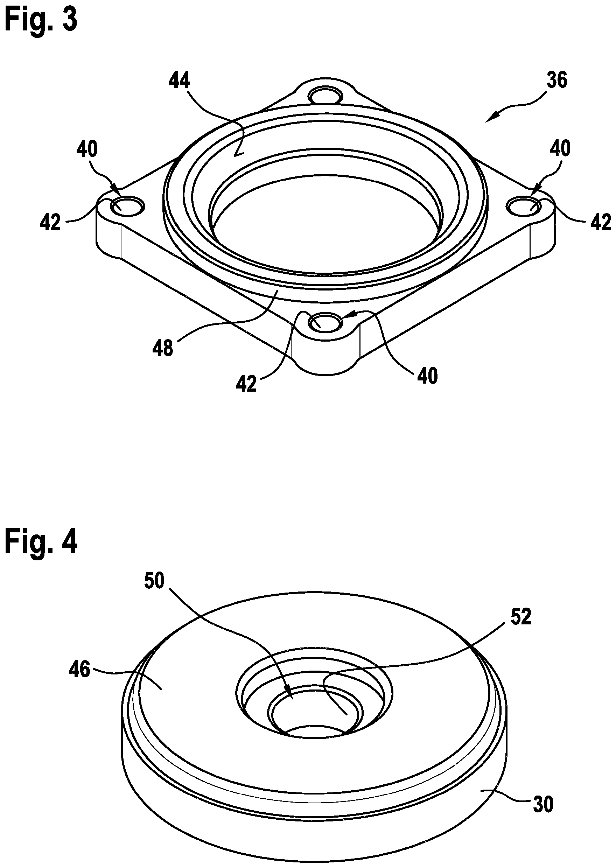

In Fig. 3 ist in eine perspektivische Ansicht das Montageelement 36 dargestellt. Das Montageelement 36 weist eine im Wesentlichen quadratische Grundform auf, wobei mittig eine Aussparung zur konzentrischen Anordnung an dem Konuslager 14 und insbesondere dem Tragelement 24 ausgebildet ist. Zur Kontaktierung des Tragelementes 24 weist das Montageelement 36 einen ringförmig angeordneten und konisch ausgebildeten Kontaktbereich 44 auf. Radial außenseitig zu dem Kontaktbereich 44 ist ein Absatz 48 ausgebildet, welcher in einem montierten Zustand innerhalb der Öffnung 38 den Kabinenträger 16 kontaktieren kann. Zur Befestigung des Montagelementes 36 an dem Kabinenträger 16 weist das Montageelement 36 vier Bohrungen 40 auf, welche jeweils ein Innengewinde 42 zur Aufnahme und zum Zusammenwirken mit Außengewinden von Verbindungselementen aufweisen. Das in Fig. 4 dargestellte Anschlagelement 30 weist auf einer dem Montageelement 36 zugewandten Seite eine konzentrisch angeordnete und flächig ausgebildete elastische Beschichtung 46 auf. Eine mittig angeordnete Durchgangsbohrung 50 dient der Aufnahme eines Kabinenbolzens (nicht dargestellt) und kann ein Innengewinde 52 aufweisen, in das der Kabinenbolzen direkt mit seinem Außengewinde verschraubbar sein kann.

### Bezugszeichenliste

### (Teil der Beschreibung)

- A: axiale Richtung
- R: radiale Richtung

- 10: Lagerung
- 12: Fahrerkabine
- 14: Konuslager
- 16: Kabinenträger
- 18: Zwischenelement
- 20: Längsachse
- 22: Dämpfungselement
- 24: Tragelement
- 26: Verbindungselement
- 28: Kabinenbolzen
- 30: Anschlagelement
- 32: Mutter
- 34: Lagerhülse
- 36: Montageelement
- 38: Öffnung
- 40: Bohrung
- 42: Innengewinde
- 44: Kontaktfläche
- 46: Beschichtung
- 48: Absatz
- 50: Durchgangsbohrung
- 52: Innengewinde

## Patentansprüche

1. Lagerung für eine Fahrerkabine (12) eines Fahrzeuges,
welche in einem montierten Zustand zwischen der Fahrerkabine (12) und einem Kabinenträger (16) des Fahrzeuges angeordnet ist, mit
einem Konuslager (14), welches mittig eine an der Fahrerkabine (12) festlegbare und sich durch eine Öffnung (38) des Kabinenträgers (16) erstreckende, hohl ausgebildete Lagerhülse (34) aufweist,
wobei die Lagerhülse (34) außenseitig über ein mit dieser verbundenes elastisches Dämpfungselement (22) mit einem konzentrisch angeordneten Tragelement (24) verbunden ist,
wobei das Tragelement (24) an dem Kabinenträger (16) kabinenseitig mittels Verbindungselementen (26) festlegbar ist, und mit
einem an einem der Fahrerkabine (12) abgewandten Ende der Lagerhülse (34) angeordneten Anschlagelement (30) zur Begrenzung einer Bewegung des Dämpfungselementes (22) in axialer Richtung (A),
**dadurch gekennzeichnet, dass**
an einer dem Anschlagelement (30) zugewandten Seite des Kabinenträgers (16) ein scheibenförmig ausgebildetes Montageelement (36) angeordnet ist, welches mittels der Verbindungselemente (26) konzentrisch zu der Lagerhülse (34) an dem Kabinenträger (16) befestigt ist,
wobei das Montageelement (36) eine Öffnung (38) aufweist, durch die das Konuslager (14) zumindest teilweise hindurchragt,
wobei das Montageelement (36) konzentrisch zu dem Konuslager (14) an dem Kabinenträger (16) angeordnet ist,
wobei das Anschlagelement (36) in radialer Richtung größer ausgebildet ist als die Öffnung (38) in dem Montageelement (36), so dass zwischen dem Anschlagelement (30) und dem Montageelement (36) in radialer Richtung eine Überlappung ausgebildet ist, um ein Ausreißen der Lagerung bei einer Überlastung durch Zugkräfte zu vermeiden, da die Zugkräfte über das Anschlagelement (30) und das Montageelement (36) abgeleitet werden können,
wobei eine Relativbewegung der Fahrerkabine und der Lagerhülse (34) in axialer Richtung A zu dem Trägerelement (24) durch einen einstellbaren Abstand zwischen dem Anschlagelement (30) und dem Montageelement (36) einstellbar begrenzt ist, und
wobei der Abstand zwischen dem Montageelement (36) und dem Anschlagelement (30) derart eingestellt ist, dass bei einer Auslenkung der Lagerhülse (34) und damit des Anschlagelementes (30) in axialer Richtung A das Anschlagelement (30) und das Montageelement (36) in Kontakt kommen, bevor das elastische Dämpfungselement (22) beschädigt wird.

2. Lagerung nach Anspruch 1,
wobei das Montageelement (36) innerhalb der Öffnung (38) des Kabinenträgers (16) an dem Tragelement (24) abgestützt ist.

3. Lagerung nach Anspruch 1 oder 2,
wobei das an dem Kabinenträger (16) festgelegte Montageelement (36) einen linienförmigen und/oder flächigen Kontakt zu dem Kabinenträger (16) aufweist.

4. Lagerung nach einem der vorherigen Ansprüche,
wobei das Montageelement (36) einen sich zumindest teilweise in die Öffnung (38) des Kabinenträgers (16) erstreckenden Absatz (48), insbesondere zur radial außenseitigen Kontaktierung des Kabinenträgers (16) innerhalb der Öffnung (38), aufweist.

5. Lagerung nach einem der vorherigen Ansprüche,
wobei das Montageelement (36) mindestens eine Bohrung (40) mit einem Innengewinde (42) zum Zusammenwirken mit einem Verbindungselement (26) aufweist.

6. Lagerung nach einem der vorherigen Ansprüche,
wobei bei einer Verlagerung der Lagerung (10) in axialer Richtung (A) das Anschlagelement (30) und das mit diesem zusammenwirkende Montageelement (36) einen, insbesondere ringförmigen, linienförmigen und/oder flächigen Kontakt aufweisen.

7. Lagerung nach einem der vorherigen Ansprüche,
wobei die Lagerhülse (34) anschlagelementseitig ein Außengewinde aufweist und das Anschlagelement (30) zum Zusammenwirken mit diesem Außengewinde ein entsprechendes Innengewinde aufweist.

8. Lagerung nach einem der vorherigen Ansprüche,
wobei das Anschlagelement (30) eine Durchgangsbohrung (50) mit einem Innengewinde (52) zur Verschraubung mit einem Außengewinde eines Kabinenbolzens (28) aufweist.

9. Lagerung nach einem der vorherigen Ansprüche,
wobei das Anschlagelement (30) montageelementseitig eine elastische Beschichtung (46) zur Kontaktierung des Montageelementes (36) aufweist.

10. Fahrzeug mit mindestens einer Lagerung (10) nach einem der Ansprüche 1 bis 9.

## Claims

1. Bearing arrangement for a driver's cab (12) of a vehicle,
which bearing arrangement is, in a mounted state, arranged between the driver's cab (12) and a cab support (16) of the vehicle, having
a cone bearing (14) which, centrally, has a bearing sleeve (34) which is fixable to the driver's cab (12) and which extends through an opening (38) of the cab support (16) and which is of hollow form,
wherein the bearing sleeve (34) is, at the outside, by way of an elastic damping element (22) connected thereto, connected to a concentrically arranged support element (24),
wherein the support element (24) is fixable to the cab support (16) at the cab side by way of connecting elements (26), and having
an abutment element (30) which is arranged on an end, averted from the driver's cab (12), of the bearing sleeve (34) and which serves for limiting a movement of the damping element (22) in an axial direction (A),
**characterized in that**
an installation element (36) of disc-shaped form is arranged on a side, facing toward the abutment element (30), of the cab support (16), which installation element is, by way of the connecting elements (26), fastened to the cab support (16) concentrically with respect to the bearing sleeve (34),
wherein the installation element (36) has an opening (38) through which the cone bearing (14) at least partially projects,
wherein the installation element (36) is arranged, concentrically with respect to the cone bearing (14), on the cab support (16),
wherein the abutment element (36) is designed to be larger in a radial direction than the opening (38) in the installation element (36), such that an overlap is formed between the abutment element (30) and the installation element (36) in a radial direction in order to prevent a breakaway of the bearing arrangement in the event of an overload by tensile forces, because the tensile forces can be dissipated via the abutment element (30) and the installation element (36),
wherein, by way of an adjustable spacing between the abutment element (30) and the installation element (36), a relative movement of the driver's cab and of the bearing sleeve (34) in an axial direction A with respect to the support element (24) is limited in an adjustable manner,
and
wherein the spacing between the installation element (36) and the abutment element (30) is set such that, in the event of a deflection of the bearing sleeve (34) and thus of the abutment element (30) in an axial direction A, the abutment element (30) and the installation element (36) come into contact before the elastic damping element (22) is damaged.

2. Bearing arrangement according to Claim 1,
wherein the installation element (36) is supported, within the opening (38) of the cab support (16), on the support element (24).

3. Bearing arrangement according to Claim 1 or 2, wherein the installation element (36) fixed to the cab support (16) is in linear and/or areal contact with the cab support (16).

4. Bearing arrangement according to one of the preceding claims,
wherein the installation element (36) has a shoulder (48) which extends at least partially into the opening (38) of the cab support (16) and which serves in particular for making contact, radially at the outside, with the cab support (16) within the opening (38).

5. Bearing arrangement according to one of the preceding claims,
wherein the installation element (36) has at least one bore (40) with an internal thread (42) for interacting with a connecting element (26).

6. Bearing arrangement according to one of the preceding claims,
wherein, in the event of a displacement of the bearing arrangement (10) in an axial direction (A), the abutment element (30) and the installation element (36) which interacts therewith are in, in particular, ring-shaped,
linear and/or areal contact.

7. Bearing arrangement according to one of the preceding claims,
wherein the bearing sleeve (34) has, at the abutment element side, an external thread, and the abutment element (30) has a corresponding internal thread for interacting with said external thread.

8. Bearing arrangement according to one of the preceding claims,
wherein the abutment element (30) has a passage bore (50) with an internal thread (52) for screw connection to an external thread of a cab bolt (28).

9. Bearing arrangement according to one of the preceding claims,
wherein the abutment element (30) has, at the installation element side, an elastic coating (46) for making contact with the installation element (36).

10. Vehicle having at least one bearing arrangement (10) according to one of Claims 1 to 9.

## Revendications

1. Suspension destinée à la cabine de conducteur (12) d'un véhicule,
laquelle suspension est disposée à l'état monté entre la cabine de conducteur (12) et un support de cabine (16) du véhicule, ladite suspension comprenant un palier conique (14) qui comporte centralement un manchon de palier creux (34) qui peut être fixé à la cabine de conducteur (12) et qui s'étend à travers une ouverture (38) ménagée dans le support de cabine (16), le manchon de palier (34) étant relié du côté extérieur à un élément de support (24), disposé concentriquement, par le biais d'un élément d'amortissement élastique (22) relié audit manchon de palier,
l'élément de support (24) pouvant être fixé côté cabine au support de cabine (16) au moyen d'éléments de liaison (26), et comprenant
un élément de butée (30) disposé à une extrémité du manchon de palier (34) qui est opposée à la cabine de conducteur (12) et destiné à limiter un mouvement de l'élément d'amortissement (22) dans la direction axiale (A),
**caractérisé en ce que**
un élément de montage (36) en forme de disque est disposé sur un côté du support de cabine (16) qui est dirigé vers l'élément de butée (30) et est fixé au support de cabine (16) concentriquement au manchon de palier (34) au moyen des éléments de liaison (26), l'élément de montage (36) comportant une ouverture (38) à travers laquelle le palier conique (14) fait au moins partiellement saillie,
l'élément de montage (36) étant disposé concentriquement au palier conique (14) sur le support de cabine (16),
l'élément de butée (36) étant conçu pour être plus grand dans la direction radiale que l'ouverture (38) ménagée dans l'élément de montage (36) de façon à former un chevauchement entre l'élément de butée (30) et l'élément de montage (36) dans la direction radiale pour empêcher le déchirement de la suspension en cas de surcharge due à des forces de traction, car les forces de traction peuvent être détournées par l'élément de butée (30) et l'élément de montage (36),
un mouvement relatif de la cabine de conducteur et du manchon de palier (34) étant limité de manière réglable dans la direction axiale A par rapport à l'élément de support (24) par une distance réglable entre l'élément de butée (30) et l'élément de montage (36), et
la distance entre l'élément de montage (36) et l'élément de butée (30) étant réglée de telle sorte que, lorsque le manchon de palier (34) et donc l'élément de butée (30) dévient dans la direction axiale A, l'élément de butée (30) et l'élément de montage (36) venant en contact avant que l'élément d'amortissement élastique (22) ne soit endommagé.

2. Suspension selon la revendication 1,
l'élément de montage (36) étant en appui sur l'élément de support (24) à l'intérieur de l'ouverture (38) du support de cabine (16).

3. Suspension selon la revendication 1 ou 2, l'élément de montage (36) fixé au support de cabine (16) comportant un contact linéaire et/ou surfacique avec le support de cabine (16).

4. Suspension selon l'une des revendications précédentes,
l'élément de montage (36) comportant un épaulement (48) qui s'étend au moins partiellement jusque dans l'ouverture (38) du support de cabine (16), en particulier pour établir un contact radialement extérieur avec le support de cabine (16) à l'intérieur de l'ouverture (38).

5. Suspension selon l'une des revendications précédentes,
l'élément de montage (36) comportant au moins un alésage (40) pourvu d'un filetage intérieur (42) destiné à coopérer avec un élément de liaison (26).

6. Suspension selon l'une des revendications précédentes,
lorsque la suspension (10) est déplacée dans la direction axiale (A), l'élément de butée (30) et l'élément de montage (36), qui coopère avec celui-ci, établissant un contact en particulier annulaire, linéaire et/ou surfacique.

7. Suspension selon l'une des revendications précédentes,
le manchon de palier (34) comportant un filetage extérieur du côté de l'élément de butée et l'élément de butée (30) comportant un filetage intérieur correspondant destiné à coopérer avec ce filetage extérieur.

8. Suspension selon l'une des revendications précédentes,
l'élément de butée (30) comportant un alésage traversant (50) pourvu d'un filetage intérieur (52) destiné au vissage sur un filetage extérieur d'une broche de cabine (28).

9. Suspension selon l'une des revendications précédentes,
l'élément de butée (30) comportant du côté élément de montage un revêtement élastique (46) destiné à venir en contact avec l'élément de montage (36).

10. Véhicule comprenant au moins une suspension (10) selon l'une des revendications 1 à 9.
